# EUROPÄISCHE PATENTANMELDUNG

(11) **EP 2 305 040 A1**
(43) Veröffentlichungstag der Anmeldung: **06.04.2011**
(21) Anmeldenummer: 09171956.7
(22) Anmeldetag: 01.10.2009
(51) Int. Cl.: A21C 5/00

(54) **Vorrichtung zum Abtrennen eines Teigblocks von einer Teigmasse sowie zugehöriges Verfahren**

(71) Anmelder: Fritsch GmbH, 97348 Markt Einersheim (DE)
(72) Erfinder: Bernhardt, Udo, 97346 Iphofen (DE)
(74) Vertreter: Götz, Georg Alois

(57) **Zusammenfassung**

Vorrichtung (1) zum Abtrennen eines Teigblocks (18) von einer Teigmasse (2) mit einer von äußeren Begrenzungselementen (4) gebildeten Kammer (3) zur Aufnahme der Teigmasse (2) und zur Abgabe des von der Teigmasse (2) abgetrennten Teigblocks (18), wobei als unteres und, zumindest im Wesentlichen, horizontal angeordnetes äußeres Begrenzungselement (4) der Kammer ein horizontal verfahrbares Schlittenelement (5) mit wenigstens einer ihrerseits relativ zum Schlittenelement (5) bewegbaren Teigauflagefläche und mit wenigstens einem beim Verfahren des Schlittenelements (5) mitbewegbaren und derart zum Abtrennen des Teigblocks (18) von der Teigmasse (2) ausgebildeten Schneidmittel (20) vorgesehen ist.

## Beschreibung

Die Erfindung betrifft eine Vorrichtung zum Abtrennen eines Teigblocks von einer Teigmasse mit einer von äußeren Begrenzungselementen gebildeten Kammer zur Aufnahme der Teigmasse und zur Abgabe des von der Teigmasse abgetrennten Teigblocks sowie ein Verfahren zum Abtrennen eines Teigblocks von einer Teigmasse, die in einer von äußeren Begrenzungselementen gebildeten Kammer aufgenommen wird, aus der der von der Teigmasse abgetrennte Teigblock anschließend abgegeben wird.

Bei sehr weichen, angegarten Teigen besteht das Problem, dass beim Abtrennen von Teigblöcken von der Gesamtmasse bzw. beim Austragen entsprechender Blöcke oder auch eines Teigstrangs aus der Gesamtteigmasse oft unweigerlich das durch den Garungsprozess, der vorab stattgefunden hat, erzeugte Porenbild beschädigt wird. Die Gefahr einer solchen Beschädigung des Porenbildes besteht beispielsweise, wenn Druckwalzen- oder Sternwalzenformen zum Separieren eines Teigblocks von der Gesamtmasse verwendet werden. Durch die Walzen wird nämlich ein bestimmter Druck auf die Teigmasse ausgeübt, der zu solchen Schäden führen kann. Außerdem müssen bei den bekannten Trennverfahren oft Gewichtsschwankungen bei den ausgetragenen Teilen, die Blöcke, Stränge oder dergleichen sein können, in Kauf genommen werden.

Ebenso besteht das Problem, dass, wenn ein Verfahren zum Abtrennen von Teigsträngen oder -blöcken verwendet wird, bei dem der Teig im Trichter insgesamt in Bewegung versetzt wird, der Teig damit einerseits einer gewissen Belastung ausgesetzt ist und andererseits unter Umständen recht lange in dem Trichter, aus der er ausgetragen werden soll, verbleibt, da eine Bewegung der Teigmasse insgesamt dazu führen kann, dass sich Restteig und Frischteig vermengen bzw. Teigreste lange im Trichter verbleibt, ohne ausgetragen zu werden.

Werden zum Abtrennen von Teigblöcken Messer oder andere Schneideinrichtungen verwendet, die sich direkt in der Teigkammer befinden, so besteht das Problem, dass die Messer geschmiert werden müssen, der Teig klebt und verdrängt wird und es schließlich wieder zu Bewegungen der Teigmasse kommt bzw. eine unerwünschte flächenmäßige Beanspruchung auftritt. Daher sind Dichtkanten usw. erforderlich, um die Messer abzudecken, bzw. es wird mit Öl gearbeitet, um die Messer zu schmieren.

Aus der EP 0 285 442 B1 ist eine Vorrichtung zur kontinuierlichen Herstellung eines Teigstreifens bekannt, bei der ein Trichter für den Teig vorgesehen ist und stromabwärts vom Trichter ein Teilungsmittel zum Teilen des Teigs in Portionen vorgesehen ist, bei dem es sich um zwei Schneidklingen handelt, die entgegengesetzt horizontal bewegt werden können, um so eine Auslassöffnung zwischen ihnen zu öffnen und wieder zu schließen.

Aus der EP 0 466 519 B1 bzw. der zugehörigen deutschen Übersetzung DE 691 10 776 T2 ist ein Verfahren zum kontinuierlichen Teilen von Teig mittels einer Vorrichtung bekannt, die einen Teigtrichter, einen Teigteiler zum Teilen des Teigs mittels Öffnens und Schließens eines Auslasses, der am Unterende des Trichters vorgesehen ist, und eine Wiegeeinrichtung unter dem Teigauslass umfasst. Der Auslass wird wiederum zwischen zwei horizontalen Schneidmessern gebildet, die horizontal aufeinander zu bzw. voneinander weg bewegt werden.

Der Erfindung liegt damit die Aufgabe zugrunde, eine diesbezüglich verbesserte Vorrichtung anzugeben, insbesondere zur schonenden Verarbeitung weicher und angegarter Teige.

Zur Lösung dieser Aufgabe ist eine Vorrichtung zum Abtrennen eines Teigblocks von einer Teigmasse mit einer von äußeren Begrenzungselementen gebildeten Kammer zur Aufnahme der Teigmasse und zur Abgabe des von der Teigmasse abgetrennten Teigblocks vorgesehen, die sich dadurch auszeichnet, dass als unteres und, zumindest im Wesentlichen, horizontal angeordnetes äußeres Begrenzungselement der Kammer ein horizontal verfahrbares Schlittenelement mit wenigstens einer ihrerseits relativ zum Schlittenelement bewegbaren Teigauflagefläche und wenigstens einem beim Verfahren des Schlittenelements mitbewegbaren und derart zum Abtrennen des Teigblocks von der Teigmasse ausgebildeten Schneidmittel vorgesehen ist.

Die Kammer der Vorrichtung, in der die Teigmasse aufgenommen ist, wird somit auf der unteren Seite, also in der Wirkrichtung der Schwerkraft, durch ein Begrenzungselement bzw. eine untere Wandung begrenzt, bei dem bzw. der es sich um ein Schlittenelement handelt. Erfindungsgemäß ist mit besonderem Vorteil genau ein Schlittenelement als untere äußere Begrenzung vorgesehen und ausreichend. Sofern in dieser Beschreibung Positionsangaben wie oben, unten, links, rechts usw. verwendet werden, beziehen sich diese aus Gründen der Einfachheit in der Regel auf die Positionen, die sich aus den Ansichten der Vorrichtung in den beiliegenden Figuren ergeben.

Das Schlittenelement weist wenigstens eine Teigauflagefläche auf, auf der die Teigmasse gegebenenfalls vor dem Abtrennen, während des Abtrennens eines Teigblocks bzw. danach länger oder auch nur zeitweise aufliegt und/oder aufliegen kann. Diese Teigauflagefläche ist ihrerseits relativ zum Schlittenelement bewegbar. Die Teigauflagefläche ist also einerseits eine Komponente des Schlittens bzw. am Schlitten angeordnet und folgt aufgrund dieser Anordnung bzw. Lagerung am Schlitten auch der horizontalen Bewegung des Schlittens, wenn dieser verfahren wird. In diesem Sinne wird sie mitbewegt. Andererseits besteht aber noch eine weitere Möglichkeit der Bewegung der Teigauflagefläche, nämlich in Form einer Relativbewegung zum Schlitten.

Damit eine solche Relativbewegung möglich ist, können als Teigauflagefläche beispielsweise Bänder wie abrollbare Endlosbänder oder Transportbänder, Rollen bzw. Walzen, die auf dem Schlittenelement gelagert sind und gegenüber diesem abrollen können, auf Schienen oder dergleichen gelagerte Platten und ähnliche Elemente verwendet werden. Darüber hinaus weist der Schlitten der erfindungsgemäßen Vorrichtung ein Schneidelement auf, das beim horizontalen Verfahren des Schlittens mitbewegt wird und so angeordnet ist, dass es im unteren Bereich der Teigkammer und somit der Teigmasse in der Kammer einen Teigblock abtrennt, wenn der Schlitten horizontal durch den Teig hindurch verfahren wird.

Dadurch, dass die Teigauflagefläche ihrerseits eine Möglichkeit zur Relativbewegung gegenüber dem Schlitten aufweist, besteht im Unterschied zu herkömmlichen Einrichtungen, bei denen beispielsweise Messer im Trichter angeordnet sind und in diesen hinein schneiden, der Vorteil, dass beim Abtrennen des Teigblocks im Rahmen der Erfindung keine unerwünschte Bewegung der Teigmasse im Trichter ausgelöst wird. Bei bekannten Vorrichtungen hingegen, bei denen die Teigmasse zeitweise großflächig auf Schneidmessern aufliegt (bei denen also keine separate Teigauflagefläche vorhanden ist), die für denn Abtrennvorgang zurückgezogen und wieder zusammengeführt werden, wird auch eine entsprechend große untere Fläche der Teigmasse in der Kammer nicht unerheblichen Belastungen ausgesetzt.

Die Relativbewegung zwischen der Teigauflagefläche und dem Schlitten bei der Erfindung hingegen kann bei geeigneter Ausbildung der Vorrichtung ein Mitreißen des Teigs in der Kammer zuverlässig verhindern. Auf diese Art und Weise kann eine besonders schonende Teigbearbeitung erreicht werden. Die Belastung, die auf den Teig beim Abschneiden ausgeübt wird, wird minimiert, und der Teig kann zeitnah abgearbeitet werden, d.h. dass entsprechend dem Teig, der oben neu in den Trichter bzw. eine anders ausgeformte Teigkammer eingeführt wird, unten einer Abgabe von Teig erfolgt, ohne dass eine unerwünschte Vermischung des Frischteigs und des Restteigs in der Kammer zu befürchten ist. Der frische Teig bleibt oben, der ältere Teig wird nach unten ausgetragen. Der Teig ist in seiner Masse verbunden und wird schichtweise abgeschält. Eine flächenmäßige Beanspruchung der Teigmasse wird erfolgreich vermieden

Die Vorrichtung ist zum Abtrennen von "Teigblöcken" in einem sehr allgemeinen Sinne ausgebildet. Unter den Begriff "Teigblock" im Sinne der Erfindung fallen insbesondere auch Teigplatten bzw. Teigstränge und andere regelmäßige und unregelmäßige Teigformen, die beim Abtrennen von einer größeren Teigmasse entstehen können.

Erfindungsgemäß kann das Schlittenelement zur Bildung von relativ zum Schlittenelement bewegbaren Teigauflageflächen zwei gegenüber dem Schlittenelement fest gelagerte und/oder, zumindest im Wesentlichen, horizontal angeordnete und/oder in vertikaler Richtung zur Ausbildung eines Spalts, zumindest im Wesentlichen, um die Höhe des von der Teigmasse abzutrennenden Teigblocks gegeneinander versetzte und/oder in Abhängigkeit von einer gewünschten Höhe des abzutrennenden Teigblocks einstellbar gegeneinander versetzte Förderbandeinrichtungen aufweisen, die insbesondere zum Abtrennen des Teigblocks beim horizontalen Verfahren des Schlittenelements hinsichtlich ihrer Förderrichtung relativ zum Schlittenelement gleichsinnig betreibbar sind.

Eine bevorzugte Ausbildung der Erfindung sieht somit vor, dass das Schlittenelement zwei Förderbandeinrichtungen aufweist, die auf dem Schlittenelement fixiert bzw. fest gelagert sind, so dass die Förderbandeinrichtungen insgesamt beim Verfahren des Schlittenelements mit diesem mitbewegt werden. Die Förderbänder bzw. Transportbänder selbst sind aber gegenüber dem Schlittenelement bewegbar sind, insbesondere so, dass ein Zerren an bzw. eine flächenmäßige Kraftausübung auf den Teig vermieden wird, wenn der Schlitten horizontal verfahren wird. Die Förderbandeinrichtungen selbst werden somit mit dem Schlitten horizontal verfahren, während die Bänder als die Komponenten, die direkten Kontakt zum Teig haben und somit die eigentliche Teigauflagefläche bilden, relativ zum Schlitten bewegbar sind und somit eine unerwünschte Übertragung der Kräfte aus der horizontalen Verfahrbewegung auf den Teig verhindern können.

Die Förderbandeinrichtungen sind zweckmäßigerweise so angeordnet, dass sie in vertikaler Richtung einen gewissen Abstand zueinander aufweisen. Dieser Abstand (zwischen dem oberen Band der unteren Förderbandeinrichtung und dem unteren Band der oberen Förderbandeinrichtung) ist vorzugsweise so gewählt, dass er genau oder im Wesentlichen der Höhe des abzutrennenden Teigblocks entspricht. Durch diesen Höhenversatz wird, wenn das Schlittenelement horizontal verfahren wird und somit auch die Förderbandeinrichtungen über den unteren Bereich des Trichters mit der Teigmasse geführt werden, ein Ausgabe- oder Austrittsspalt für den Teigblock zur Seite bzw. nach unten geschaffen, durch den der Teigblock auf einen unteren bzw. seitlichen Bereich des Schlittenelements oder auch auf eine unterhalb des Schlittenelements angeordnete Weiterverarbeitungseinrichtung wie ein weiteres Förderband oder dergleichen geleitet werden kann.

Der Versatz der beiden Förderbandeinrichtungen zueinander kann einstellbar sein. Der Höhenunterschied bzw. -abstand zwischen den beiden Förderbandeinrichtungen kann also verstellt werden, um so durch einen geänderten Austrittsspalt eine andere, größere oder kleinere, Teigmenge von der gesamten Teigmasse abtrennen zu können. Die Förderbänder können zum Abtrennen des Teigblocks gleichsinnig betrieben werden, insbesondere so, dass sie beim horizontalen Verfahren des Schlittenelements gegenüber der Teigmasse abrollen. Die Förderbänder können auch aktiv entgegengesetzt zur Verfahrrichtung des Schlittenelements betrieben werden.

Die Förderbandeinrichtungen können derart in horizontaler Richtung fest zueinander angeordnet sein, dass ihre horizontale Relativposition beim horizontalen Verfahren des Schlittenelements, zumindest im Wesentlichen, gleich bleibt, und/oder die Förderbandeinrichtungen können mit, zumindest im Wesentlichen, gleicher Fördergeschwindigkeit und/oder derart, dass sie beim Verfahren des Schlittenelements abrollen, betreibbar sein.

Die Förderbänder sind also, was ihre horizontale Positionierung angeht, vorzugsweise fest miteinander verbunden bzw. gekoppelt, beispielsweise durch die feste Lagerung auf dem Schlittenelement, die lediglich eine Bewegung der Bänder der Förderbandeinrichtungen relativ zum Schlitten ermöglicht, nicht aber der Lagerungen der Förderbandeinrichtungen. Der durch das Schlittenelement vermittelte gemeinsame horizontale Bewegungsablauf fördert das präzise Abtrennen des Teigblocks, wobei durch die Höhenverstellbarkeit bzw. vertikale Verstellbarkeit gegeneinander dennoch eine flexible Anordnung gegeben ist, mit der mal mehr, mal weniger Teig ausgetragen werden kann.

Erfindungsgemäß kann genau ein Schneidmittel vorgesehen sein und/oder es kann wenigstens ein Schneidmittel in unmittelbarer Nähe der oberen Förderbandeinrichtung, insbesondere unterhalb der oberen Förderbandeinrichtung, und/oder am und/oder im Bereich des der zweiten Förderbandeinrichtung zugewandten Endes der oberen Förderbandeinrichtung angeordnet sein und/oder wenigstens ein Schneidmittel kann eine Säge, insbesondere eine Bandsäge, und/oder ein Messer, insbesondere ein Ultraschallmesser, und/oder eine Schneidkante sein und/oder ein auf einem Laser- und/oder Wasserstrahl- und/oder mechanischen Wirkprinzip basierendes Schneidmittel sein.

Bei der erfindungsgemäßen Vorrichtung mit dem Schlittenelement und den beiden darauf befestigten Förderbandeinrichtungen ist in aller Regel eine einzige Schneidanordnung, beispielsweise ein Messer, ausreichend, um wie gewünscht einen Teigblock abzutrennen. Das Schneidmittel, bei dem es sich beispielsweise um ein Messer, eine Säge, eine Schneidkante bzw. um ein Schneidmittel auf Basis eines Laser- oder Wasserstrahlprinzips oder dergleichen handeln kann, ist vorzugsweise im Bereich der oberen Förderbandeinrichtung, zweckmäßig direkt unterhalb dieser, angeordnet, um so ein Teigband bzw. einen Teigstrang in Höhe (der Oberkante) des Spalts zwischen den beiden Förderbandeinrichtungen von der gesamten Teigmasse abzutrennen, wenn der Schlitten mit den beiden Förderbändern von links nach rechts bzw. von rechts nach links horizontal im unteren Bereich durch die Teigmasse bewegt wird. Das obere Förderband hebt dabei den Restteig ab und hält ihn in der Kammer. Die Teigmasse selbst wird nicht in Bewegung versetzt. Die Bänder der Förderbandeinrichtungen rollen zweckmäßigerweise einfach gegenüber dem Teig ab, so dass die Schnittbewegung so durchgeführt werden kann, dass die Teigmasse insgesamt in Ruhe bleibt. Selbstverständlich kann als Schneidmittel auch ein Schälmittel bzw. eine Kombination verschiedener Schneideinrichtungen, die gegebenenfalls auf unterschiedlichen Wirkprinzipien basieren können, vorgesehen sein.

Das Schlittenelement kann derart verfahrbar sein, dass das wenigstens eine mitbewegbare Schneidmittel zum Abtrennen des Teigblocks über die, zumindest im Wesentlichen, gesamte horizontale Länge oder Breite der Kammer zur Aufnahme der Teigmasse verfahrbar ist und/oder das Schlittenelement kann mit hoher Verfahrgeschwindigkeit, insbesondere mit einer Verfahrgeschwindigkeit im Bereich von 2m/min bis 10m/min, insbesondere mit, zumindest näherungsweise, 7m/min verfahrbar sein.

Vorzugsweise ist das Schneidelement so angeordnet, dass es ausgehend von einer Position am linken oder rechten unteren Rand des Trichters bzw. der Kammer zum gegenüberliegenden unteren Rand des Trichters verfahren wird, wenn der Schlitten sich horizontal bewegt, so dass über die gesamte untere Breite bzw. Länge ein Teigblock von der Teigmasse abgetrennt wird. Der Schneidvorgang erfolgt dabei vorzugsweise eher schnell, wobei in Versuchen eine Geschwindigkeit von ungefähr 7m/min als geeignet für die Schlittenbewegung ermittelt wurde. In Abhängigkeit von der Art des Teigs oder auch beispielsweise der gewünschten Weiterverarbeitung nach dem Austragen aus dem Trichter können aber auch andere Verfahrgeschwindigkeiten des Schlittenelements und somit andere Schneidgeschwindigkeiten vorgesehen sein.

Das Schlittenelement kann ein in das Schlittenelement integriertes und mitbewegbares vorderes und/oder hinteres (bzw. ein linkes und/oder rechtes seitliches) äußeres Begrenzungselement für die Kammer für die Teigmasse aufweisen, insbesondere in Form einer Platte und/oder, zumindest im Wesentlichen, in der Höhe eines vertikalen Spalts zwischen zwei Förderbandeinrichtungen (genauer beispielsweise in der Höhe des Spalts zwischen der Oberkante des Bands der unteren und der Unterkante des Band der oberen Förderbandeinrichtung; bei Montage an einer anderen Komponente des Schlittens kann die integrierte Begrenzung aber auch höher sein) des Schlittenelements und/oder derart, dass sich das oder die in das Schlittenelement integrierten äußeren Begrenzungselemente mit nicht mitbewegbaren vorderen und/oder hinteren (bzw. seitlichen) äußeren Begrenzungselementen der Kammer zur Ausbildung einer geschlossenen Begrenzungsfläche ergänzen, und/oder ein äußeres Begrenzungselement aus und/oder mit wenigstens einer vertikal angeordneten Förderbandeinrichtung.

Wenn in das Schlittenelement eine vordere bzw. hintere Begrenzung der Teigkammer integriert ist (bzw. je nach Ansicht auf die Vorrichtung eine bzw. zwei seitliche Begrenzungen), so bewegen sich diese vorderen und hinteren Wandungen mit dem Schlittenelement mit, um so eine nicht durch feste Trichterwände negativ beeinflusste Schnittbewegung zu erreichen. Wird also das Schlittenelement horizontal von rechts nach links verfahren, so wird der untere Teil der vorderen und hinteren Begrenzungswand für die Teigkammer mitverfahren. Je nach konkreter Realisierung der Vorrichtung reicht es aus, wenn die vorderen und hinteren bzw. seitlichen Begrenzungen im Bereich des niedriger gelegenen Förderbands, also nicht über die gesamte Breite des Schlittens, vorgesehen sind, damit dort kein unerwünschter Teigaustritt nach vorne oder hinten erfolgen kann. Dementsprechend kann das integrierte vordere und hintere Begrenzungselement eine Höhe aufweisen, die, im Wesentlichen, der Höhe des vertikalen Spalts zwischen zwei Förderbandeinrichtungen entspricht. Dieses höhenmäßig begrenzte Element kann sich dann mit einem sich darüber anschließenden bezüglich der Teigkammer festen Element zur Begrenzung der Teigkammer zur Ausbildung einer geschlossenen Begrenzungsfläche ergänzen.

Um bei den vorderen und hinteren Begrenzungselementen zu verhindern, dass unerwünschte Belastungen bzw. Bewegungen entstehen (der Teig ist starr, und so würde beispielsweise eine Kraft ausgeübt, die Begrenzungsplatten, die horizontal verfahren werden, aus dem Teig hinausziehen würde), können statt einfacher Platten auch alternativ bzw. ergänzend vertikal angeordnete Förderbandeinrichtungen oder auch Rollen und dergleichen als bzw. bei den integrierten Begrenzungselementen verwendet werden, mit denen es möglich ist, das Auftreten beispielsweise unerwünschter Flächenkräfte zu vermeiden.

Das Schlittenelement kann wenigstens eine Abgabeöffnung zur Abgabe des durch das wenigstens eine Schneidmittel abgetrennten Teigblocks nach unten aufweisen, insbesondere in Form eines oder des Spalts zwischen zwei Förderbandeinrichtungen, und/oder unterhalb des Schlittenelements kann wenigstens eine separate Förderbandeinrichtung vorgesehen sein, die zum Weitertransport des durch das wenigstens eine Schneidmittel abgetrennten Teigblocks ausgebildet ist und/oder die einen, zumindest im Wesentlichen, horizontal verlaufenden und einen in Förderrichtung vorgelagerten ansteigend verlaufenden Abschnitt aufweist und/oder die kontinuierlich und/oder mit variabler Geschwindigkeit betreibbar ist und/oder der wenigstens eine oder genau eine Bemehlungseinrichtung zugeordnet ist und/oder die mit einer im Vergleich zur Verfahrgeschwindigkeit des Schlittenelements niedrige Fördergeschwindigkeit, insbesondere im Bereich von 1 m/min betreibbar ist.

Durch den Spalt zwischen den Förderbandeinrichtungen bzw. eine weitere Abgabeöffnung im Schlittenelement kann der Teigblock zur Weiterverarbeitung beispielsweise an ein tiefer gelegenes Förderband abgegeben werden. Eine solche tiefer gelegene Förderbandeinrichtung kann den Teigblock bzw. den Teigstrang, der von der Teigmasse abgetrennt worden ist beispielsweise zum Ausformen bestimmter Gebäckstücke oder dergleichen weitertransportieren. Die separate Förderbandeinrichtung unterhalb des Schlittenelements kann so ausgebildet sein, dass sie im Bereich unterhalb der Teigkammer exakt oder im Wesentlichen horizontal verläuft, während sie in einem in Förderrichtung vorgelagerten Bereich ansteigend angeordnet ist. Vorzugsweise im vorgelagerten, ansteigend angeordneten Bereich, dem sich in einem stumpfen Winkel der horizontale Bereich anschließt, kann eine Bemehlungseinrichtung vorgesehen sein. Gegebenenfalls können auch mehrere Bemehlungseinrichtungen, unter Umständen auch an späteren Verarbeitungsstationen, vorgesehen sein. Bei der erfindungsgemäßen Vorrichtung ist aber eine untere Teigbandbemehlungseinrichtung in aller Regel ausreichend.

Die Transportgeschwindigkeit des separaten Förderbands unterhalb der Teigkammer ist zweckmäßigerweise im Vergleich zur Schneidgeschwindigkeit eher gering gewählt, beispielsweise im Bereich von 1m/min. Selbstverständlich kann die separate Förderbandeinrichtung unterhalb der Teigkammer horizontal deutlich länger als die Teigkammer ausgebildet sein, um einen optimalen Weitertransport bzw. eine optimale Bemehlung des Transportbands im Vorfeld des Austritts des Teigblocks aus dem Trichter zu ermöglichen.

Erfindungsgemäß kann, insbesondere im Anschluss an eine unterhalb des Schlittenelements angeordnete separate Förderbandeinrichtung, eine Messeinrichtung und/oder Wiegebandeinrichtung zur Kontrolle des Massen- und/oder Volumenstroms des oder der Teigblöcke und/oder zur Erzeugung eines die Schnittbewegung und/oder das endgültige Abtrennen für einen nachfolgenden Teigblock auslösenden Signals vorgesehen sein und/oder die Vorrichtung kann zur direkt aneinander anschließenden Anordnung abgetrennter Teigblöcke auf der unterhalb des Schlittenelements angeordneten Förderbandeinrichtung ausgebildet sein, insbesondere in Abhängigkeit eines Signals der Messeinrichtung und/oder Wiegebandeinrichtung.

Durch ein Wiegeband, das beispielsweise direkt an die untere Förderbandeinrichtung angeschlossen ist und mit einem kleineren horizontalen (Transport-) Abschnitt verläuft, kann die Masse bzw. der Volumenstrom der abgetrennten Teigblöcke kontrolliert werden, um im Fall von Abweichungen geeignete Maßnahmen zur Angleichung des Massenstroms bzw. Volumenstroms ergreifen zu können. Eine solche Maßnahme kann beispielsweise die Vorgabe unterschiedlicher Geschwindigkeiten für aneinander anschließende Förderbänder zum Weitertransport des abgetrennten Teigblocks sein. Durch unterschiedliche Fördergeschwindigkeiten der Bänder können Staus bzw. kann ein Zug im Teigband oder Teigstrang erzeugt werden. Die Messeinrichtung bzw. das Wiegeband kann auch dazu verwendet werden festzustellen, wann eine Masse und/oder ein Volumen, die bzw. das dem eines gesamten Teigblocks entspricht, über die Messeinrichtung bzw. das Wiegeband geführt wurde, um so über ein Signal eine erneute Schnittbewegung bzw. einen erneuten Schnittvorgang zur Abtrennung eines weiteren Teigblocks auszulösen. Auf diese Art und Weise kann erreicht werden, dass die Teigblöcke auf der unteren Förderbandeinrichtung direkt aneinander liegen, so dass ein kontinuierliches Teigband entsteht. Mit diesen Weiterbildungen betrifft die Erfindung daher eine Vorrichtung nicht nur zum Abtrennen eines Teigblocks, sondern auch zur Weiterverarbeitung, zum Weitertransport bzw. zum Erzeugen eines kontinuierlichen Teigbands.

An eine oder die unterhalb des Schlittenelements angeordnete Förderbandeinrichtung oder Mess- und/oder Wiegebandeinrichtung kann sich eine, gegebenenfalls weitere, insbesondere, zumindest im Wesentlichen, horizontal angeordnete Förderbandeinrichtung anschließen, insbesondere eine mit einer abweichenden Fördergeschwindigkeit zu einer ersten separaten Förderbandeinrichtung betreibbare weitere Förderbandeinrichtung. Eine solche weitere bzw. auch mehrere weitere Förderbandeinrichtungen transportieren das abgetrennte Teigband zur Weiterverarbeitung, beispielsweise zu einer Vorrichtung, an der Gebäckstücke ausgeformt werden. Sie können sich direkt an das erste Förderband oder auch ein Wiegeband bzw. die Messeinrichtung anschließen und sind mit besonderem Vorteil mit einer zum ersten Förderband bzw. zum Wiegeband abweichenden Geschwindigkeit betreibbar sein, um auf diese Art und Weise Stau oder Zug erzeugen zu können, um beispielswesie eventuelle Abweichungen beim gleichmäßigen Abschneiden des Teigbands wieder ausgleichen zu können. Die vorgelagerte Bemehlungseinrichtung verhindert im Bereich der unteren Förderbänder und insbesondere an einem möglichen Wiegeband die Entstehung von Verklebungen.

Des weiteren betrifft die Erfindung ein Verfahren zum Abtrennen eines Teigblocks von einer Teigmasse, die in einer von äußeren Begrenzungselementen gebildeten Kammer aufgenommen ist oder wird, aus der der von der Teigmasse abgetrennte Teigblock anschließend abgegeben wird, insbesondere ein Verfahren zum Abtrennen eines Teigblocks mittels einer Vorrichtung wie vorstehend beschrieben, das sich dadurch auszeichnet, dass die Kammer unten durch ein, zumindest im Wesentlichen, horizontal angeordnetes Schlittenelement als äußeres Begrenzungselement begrenzt wird, das im Rahmen des Verfahrens horizontal verfahren wird und das mit wenigstens einer Teigauflagefläche, die ihrerseits relativ zum Schlittenelement bewegt wird, und mit wenigstens einem Schneidmittel ausgebildet ist, das beim Verfahren des Schlittenelements mitbewegt wird und derart den Teigblock von der Teigmasse abtrennt.

Durch das horizontale Verfahren des einen Schlittenelements wird das Schneidmittel in einer bestimmten Höhe durch den unteren Bereich der Teigmasse in der Teigkammer bewegt und trennt so ein Teigband einer bestimmten Höhe ab. Die Teigauflagefläche selbst ist bezüglich des Schlittens nicht starr, sondern beweglich angeordnet, so dass das Problem der Erzeugung einer unerwünschten Bewegung im Teig beispielsweise durch ein Abrollen gegenüber dem Teig verhindert wird. So ist eine besonders schonende Verarbeitung weicher, angegarter Teige mit einer hohen Gewichtsgleichmäßigkeit und ohne das Problem einer Vermischung von Frischteig und Restteig gewährleistet.

Die relativ zum Schlittenelement bewegten Teigauflageflächen können mittels zweier gegenüber dem Schlittenelement fest gelagerter und/oder, zumindest im Wesentlichen, horizontal angeordneter und/oder in vertikaler Richtung zur Ausbildung eines Spalts, zumindest im Wesentlichen, um die Höhe des von der Teigmasse abzutrennenden Teigblocks gegeneinander versetzter und/oder in Abhängigkeit von einer gewünschten Höhe des abzutrennenden Teigblocks einstellbar gegeneinander versetzter Förderbandeinrichtungen gebildet werden, wobei die Förderbandeinrichtungen insbesondere zum Abtrennen des Teigblocks beim horizontalen Verfahren des Schlittenelements hinsichtlich ihrer Förderrichtung relativ zum Schlittenelement gleichsinnig betrieben werden.

Es wird also zweckmäßigerweise ein Schlitten mit zwei Förderbändern verwendet, von denen das eine vertikal höher angeordnet ist und sich in einer Startposition weitgehend oder vollständig außerhalb des Trichters befindet, während das untere Förderband den Teigkammerboden bildet. Nun wird das obere Förderband mit dem Schlitten horizontal durch die Teigkammer hindurchgeführt und trennt so einen Teigstrang der gewünschten Höhe von der gesamten Teigmasse ab, wozu das Schneidmittel verwendet wird, das vorzugsweise an der Unterkante des oberen Förderbands bzw. in deren Nähe befestigt ist. Die beiden Förderbänder rollen bei der Schlittenbewegung gegenüber dem Teig ab, sind also in diesem Sinne relativ zum Schlittenelement bewegte Teigauflageflächen. Die Förderbandeinrichtungen insgesamt sind aber fest auf dem Schlitten gelagert. Das Abrollen erfolgt bei beiden Bändern in gleicher Richtung. Selbstverständlich lässt sich auch explizit eine Fördergeschwindigkeit für die Förderbandeinrichtungen vorgeben bzw. einstellen, beispielsweise zur optimalen Bearbeitung spezifischer Teige.

Die Förderbandeinrichtungen können derart in horizontaler Richtung fest zueinander angeordnet sein oder werden, dass ihre horizontale Relativposition beim horizontalen Verfahren des Schlittenelements, zumindest im Wesentlichen, gleich bleibt, und/oder die Förderbandeinrichtungen können mit, zumindest im Wesentlichen, gleicher Fördergeschwindigkeit und/oder derart, dass sie beim Verfahren des Schlittens abrollen, betrieben werden. Die horizontale Kopplung der beiden Förderbänder ermöglicht ein besonders wirksames Schneiden mit großer Gleichmäßigkeit, anders als bei herkömmlichen Einrichtungen, bei denen Schneidmittel ohne horizontalen Verbund von links bzw. rechts in eine beispielsweise durch die Schwerkraft nach unten abgegebene Teigmasse eindrücken.

Das Schlittenelement kann derart verfahren werden, dass das wenigstens eine mitbewegte Schneidmittel zum Abtrennen des Teigblocks ausgehend von einer Startposition im Bereich eines seitlichen oder vorderen oder hinteren äußeren Begrenzungselements der Kammer zur Aufnahme der Teigmasse über die, zumindest im Wesentlichen, gesamte horizontale Breite oder Länge der Kammer in eine seitliche oder hintere oder vordere Endlage im Bereich eines gegenüberliegenden seitlichen oder hinteren oder vorderen äußeren Begrenzungselements verfahren wird und so eine Schnittbewegung ausführt, und/oder das Schlittenelement kann mit hoher Verfahrgeschwindigkeit, insbesondere mit einer Verfahrgeschwindigkeit im Bereich von 2m/min bis 10m/min, insbesondere mit etwa oder exakt 7m/min, verfahren werden. Selbstverständlich können auch andere Verfahrgeschwindigkeiten bzw. Schnittgeschwindigkeiten sinnvoll sein, in Abhängigkeit davon, welche Beschaffenheit der Teig hat bzw. auf welche Art und Weise die abgetrennten Teigblöcke weiterverarbeitet oder -transportiert werden sollen.

Ausgehend von der seitlichen oder hinteren oder vorderen Endlage kann das Schlittenelement und damit das wenigstens eine Schneidmittel im Rahmen einer Rückhubbewegung wieder zurück in die Startposition verfahren werden, woraufhin die Teigmasse gegebenenfalls in der Kammer um den vertikalen Versatz der beiden Förderbandeinrichtungen nach unten nach rutscht, so dass erneut eine Schnittbewegung zur Abtrennung eines Teigblocks durchgeführt werden kann.

Der Schlitten mit den beiden Förderbändern befindet sich also zunächst beispielsweise in einer Startposition, bei der das untere Förderband den Boden des Teigtrichters bildet, während das obere Förderband fast vollständig in einem Bereich außerhalb des Trichters angeordnet ist. Dann erfolgt die Schnittbewegung, bei der der Schlitten durch den gefüllten Trichter fährt und das Schneidelement den Teigblock herausschneidet. Dabei wird beim Erreichen des entgegen gesetzten seitlichen Endes eine seitliche Endlage (bzw. bei einer Bewegung von vorne nach hinten oder umgekehrt eine vordere oder hintere Endlage) erreicht. Der Teig wird an der der Endstellung entsprechenden Trichterwand abgetrennt. Der Teigblock kann beispielsweise durch den Spalt zwischen den Förderbändern nach unten auf ein separates Förderband weitergeleitet werden. Bei der Rückhubbewegung wird nun der Schlitten vom erreichten seitlichen (hinteren, vordern) Ende zurück zum ersten Ende, das der Startposition entspricht, horizontal verfahren. Dann kann der Teig aus der Teigkammer nach unten nachrutschen, da nun der Boden des Trichters bzw. der Kammer wieder durch das untere Förderband gebildet wird. Der auf diese Art und Weise freiwerdende Bereich wird somit durch den Teig von oben aufgefüllt. Bei jedem Schnittvorgang wird ein Teigband abgeschnitten, das durch eine Teigzugabe von oben in die Kammer in seiner Masse ausgeglichen werden kann, ohne dass die Gefahr einer unerwünschten Vermengung des neu zugeführten Frischteigs mit dem Restteig in der Kammer besteht. Danach kann erneut eine Schnittbewegung durchgeführt werden.

Insbesondere im Anschluss an eine unterhalb des Schlittenelements angeordnete separate Förderbandeinrichtung kann eine Messeeinrichtung und/oder Wiegebandeinrichtung den Massen- und/oder Volumenstrom des oder der Teigblöcke kontrollieren und/oder einen Schnittvorgang bzw. die Schnittbewegung oder das endgültige Abtrennen für einen nachfolgenden Teigblock auslösendes Signal erzeugen, und/oder abgetrennte Teigblöcke können direkt aneinander anschließend auf der unterhalb des Schlittenelements angeordneten Förderbandeinrichtung angeordnet werden, insbesondere in Abhängigkeit eines Signals der Messeinrichtung und/oder Wiegebandeinrichtung.

Durch das direkte Aneinanderlegen der Teigblöcke auf dem separaten unteren Förderband unterhalb des Trichters kann ein kontinuierlicher Teigstrang ohne nennenswerte Teigschwankungen erzeugt werden, insbesondere, wenn eine Kontrolle des Teigstroms mittels eines Wiegebands bzw. einer Messeinrichtung (alternativ oder ergänzend zu einem Wiegeband) durchgeführt wird.

Weitere Vorteile, Merkmale und Einzelheiten der Erfindung ergeben sich anhand des folgenden Ausführungsbeispiels so wie aus den Zeichnungen. Dabei zeigen:
- Fig. 1: Eine erfindungsgemäße Vorrichtung in einer Startposition,
- Figur 2A: die Vorrichtung der Figur 1 bei der Schnittbewegung,
- Fig. 2B: eine Detailansicht der Figur 2A mit dem Schneidmittel,
- Fig.3: die seitliche Endlage des Schlittenelements bei der erfindungsgemäßen Vorrichtung,
- Fig. 4: den Rückhub des Schlittenelements,
- Fig. 5: das erneute Einnehmen der Startposition bei der erfindungsgemäßen Vorrichtung bzw. gemäß dem erfindungsgemäßen Verfahren und
- Fig. 6: die erneute Durchführung einer Schnittbewegung.

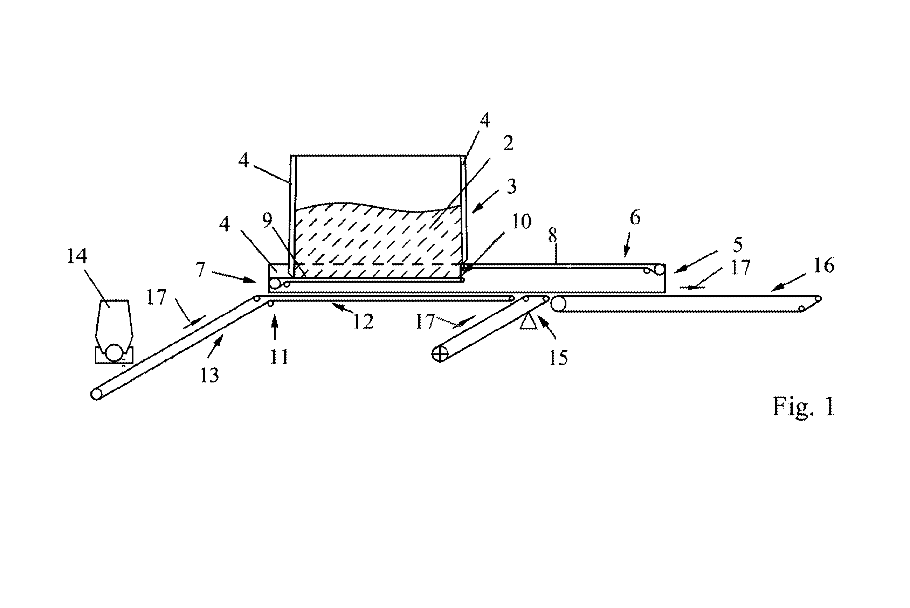

Die Figur 1 zeigt die erfindungsgemäße Vorrichtung 1 in einer Startposition. Die Vorrichtung 1 zum Abtrennen eines Teigblocks aus einer Teigmasse 2 weist eine Kammer 3 auf, die von äußeren Begrenzungselementen 4 begrnzt wird. Als unteres äußeres Begrenzungselement ist ein Schlittenelement 5 vorgesehen, das in diesem Ausführungsbeispiel horizontal angeordnet ist und zwei fest auf dem Schlittenelement 5 gelagerte Förderbandeinrichtungen 6 und 7 aufweist. Die Förderbandeinrichtungen 6 und 7 bilden mittels ihrer Bänder 8 und 9 Teigauflageflächen aus, die relativ zum Schlittenelement 5 bewegbar sind. Des Weiteren ist ein hier nicht genauer erkennbares Schneidmittel vorgesehen, das mit dem Schlittenelement 5 beim horizontalen Verfahren desselben mitbewegt wird.

Zwischen den Förderbandeinrichtungen 6 und 7, die sich horizontal in einer festen Relativposition zueinander befinden, bzw. zwischen deren Bändern 8 und 9 wird ein vertikaler Spalt 10 ausgebildet, der gegebenenfalls einstellbar ist und der die Höhe des von der Teigmasse 2 abzutrennenden Teigblocks vorgibt. In der hier gezeigten Startposition befindet sich die untere Förderbandeinrichtung 7 beinahe vollständig unterhalb der Kammer 3, bildet also den Kammerboden, während die obere Förderbandeinrichtung 6 sich außerhalb der Kammer 3 befindet bzw. mit ihrer in dieser Darstellung linken Spitze auf der Höhe der rechten seitlichen Kammerbegrenzung angeordnet ist. Die Angaben horizontal, vertikal, seitlich sowie vorne und hinten beziehen sich im Folgenden so wie in der Regel auch schon in der allgemeinen Beschreibung aus Gründen der Einfachheit auf die Darstellung in den Figuren. In der Praxis ist es hingegen oft so, dass die Maschine zur Teigverarbeitung bzw. Teigbanderzeugung hinsichtlich der Lage ihrer Komponenten von der Achse der Transportbänder für die Weiterleitung bzw. -verarbeitung des Teigs aus betrachtet wird, so dass abweichend von der hier gewählten Bezeichnung dann die beispielsweise in der Darstellung der Figur 1 rechte äußere Begrenzung der Kammer 3 zur vorderen Begrenzung wird, während die linke Begrenzung der Kammer 3 als die hintere Begrenzung bezeichnet würde.

Unterhalb des Schlittenelements 5 befindet sich eine weitere separate Förderbandeinrichtung 11, die in horizontaler Richtung länger als die Kammer 3 ausgebildet ist und zudem einen horizontalen Abschnitt 12 und einen in Richtung des Transports vorgelagerten vertikal ansteigenden Abschnitt 13 aufweist. Diese beiden Abschnitte 12 und 13 treffen sich in einem stumpfen Winkel. Im Bereich des ansteigenden Abschnitts 13 befindet sich eine Bemehlungseinrichtung 14, über die Mehl auf die separate Förderbandeinrichtung 11 aufgebracht wird, um ein Verkleben des abgetrennten Teigblocks im Bereich des separaten Förderbands 11 und einer sich anschließenden Wiegebandeinrichtung 15 sowie der nachfolgenden horizontalen Förderbandeinrichtung 16 zu verhindern. Mittels der Wiegebandeinrichtung 15 wird der Strom des Teigs, der aus der Kammer 3 abgetrennt wurde, kontrolliert, um so gegebenenfalls Schwankungen und Ungleichmäßigkeiten zu erkennen. In Abhängigkeit von derart festgestellten Ungleichmäßigkeiten können die Förderbandeinrichtungen 11 bzw. 16 mit voneinander unterschiedlichen Geschwindigkeiten betrieben werden, um so einen Stau zu erzeugen oder Zug auf einen auf diesen befindlichen Teigblock auszuüben um so den Teigstrom wieder wie gewünscht anzupassen. Des weiteren kann die Wiegebandeinrichtung 15, die den Teigstrom überwacht, dazu verwendet werden, ein Signal zu erzeugen bzw. auszulösen, das den Schnittvorgang, also die Bewegung des Schlittenelements 5, initiiert, beispielsweise jeweils dann, wenn eine bestimmte Teigmenge, die der Menge eines abzutrennenden Teigblocks entspricht, die Wiegebandeinrichtung 15 passiert hat. Die Wiegebandeinrichtung 15 sowie die Förderbandeinrichtungen 11 und 16 werden gleichsinnig hier in Richtung der Pfeile 17, betrieben.

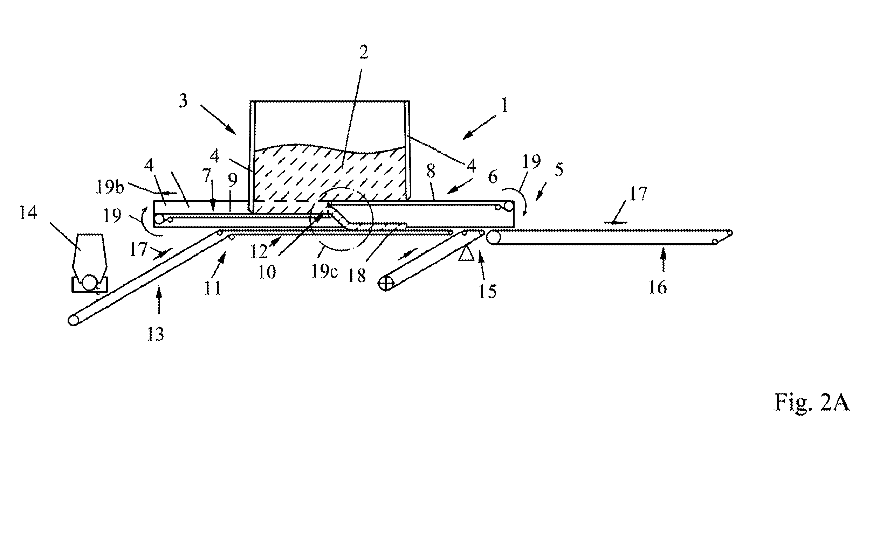

Die Figur 2A zeigt die Vorrichtung 1 der Figur 1 bei der Schnittbewegung, bei der das Schlittenelement 5 in der Darstellung von rechts nach links gemäß dem Pfeil 19b durch den unteren Bereich der Teigmasse 2 in der Kammer 3 bewegt wird, um so einen Teigblock 18 von der gesamten Teigmasse 2 zu separieren. Dabei rollen die Förderbandeinrichtungen 6 und 7 gleichsinnig gemäß den Pfeilen 19 relativ zum Schlittenelement 5 ab, wodurch verhindert wird, dass die Teigmasse 2 unerwünschter Weise in Bewegung versetzt wird. Durch den vertikalen Spalt 10 gelangt der abgetrennte Teigblock 18, der in der Darstellung der Figur 2A lediglich halb von der Teigmasse 2 abgetrennt ist, auf die untere separate Förderbandeinrichtung 11.

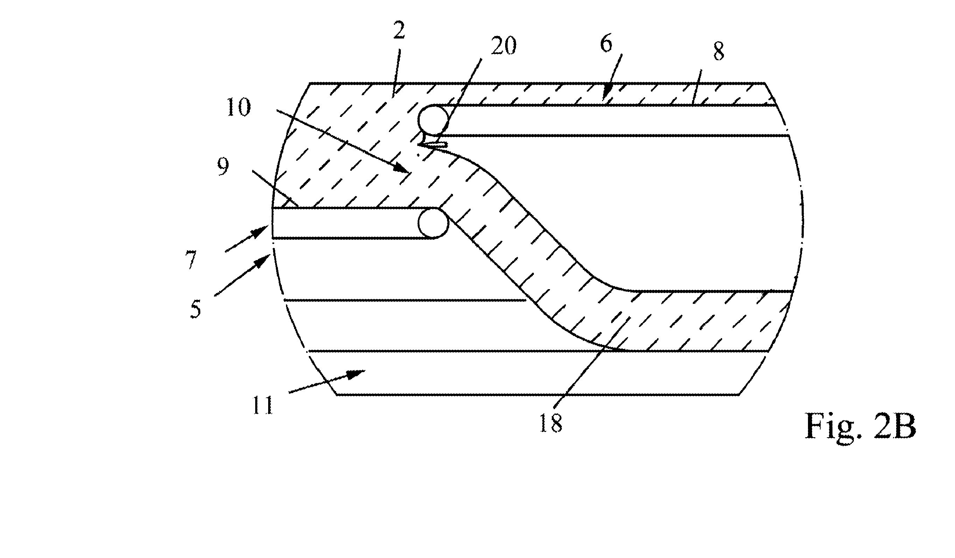

Das Abtrennen von der Teigmasse 2 erfolgt durch ein Schneidmittel 20, das in der Detaildarstellung zum Kreis 19c der Figur 2A in der Figur 2B gezeigt ist.

Dieses Schneidmittel 20 ist unterhalb der oberen Förderbandeinrichtung 6 angeordnet und schneidet, während das Schlittenelement mit den Förderbandeinrichtungen 6 und 7 von rechts nach links durch die Teigmasse 2 transportiert wird, dein Teigblock 18 nach und nach ab.

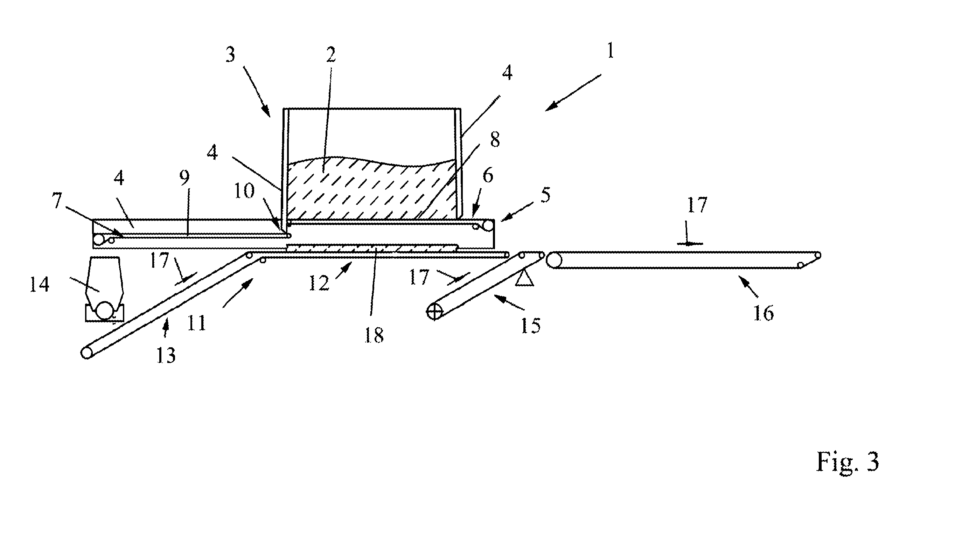

Schließlich wird beim Verfahren des Schlittenelements 5 die seitliche Endlage erreicht, die in der Figur 3 gezeigt ist. In diesem Fall wird nun das untere äußere Begrenzungselement der Kammer 3 durch die Förderbandeinrichtung 6, also durch die obere Förderbandeinrichtung, bzw. durch deren Transportband gebildet. Der Teig ist nun an der linken seitlichen Trichterwand vollständig abgetrennt worden und liegt auf der separaten Förderbandeinrichtung 11. Dort erfolgt ein Weitertransport in Richtung der Wiegebandeinrichtung 15.

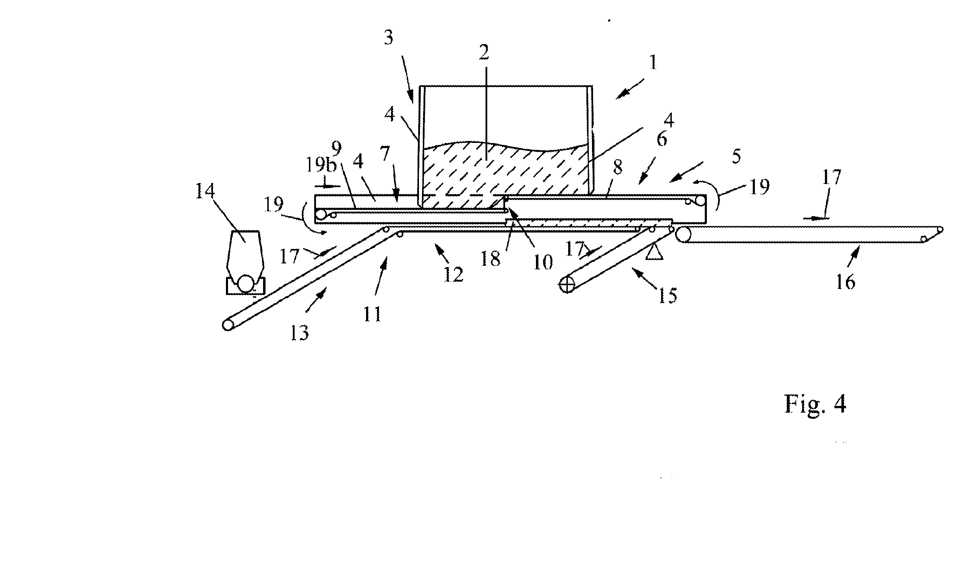

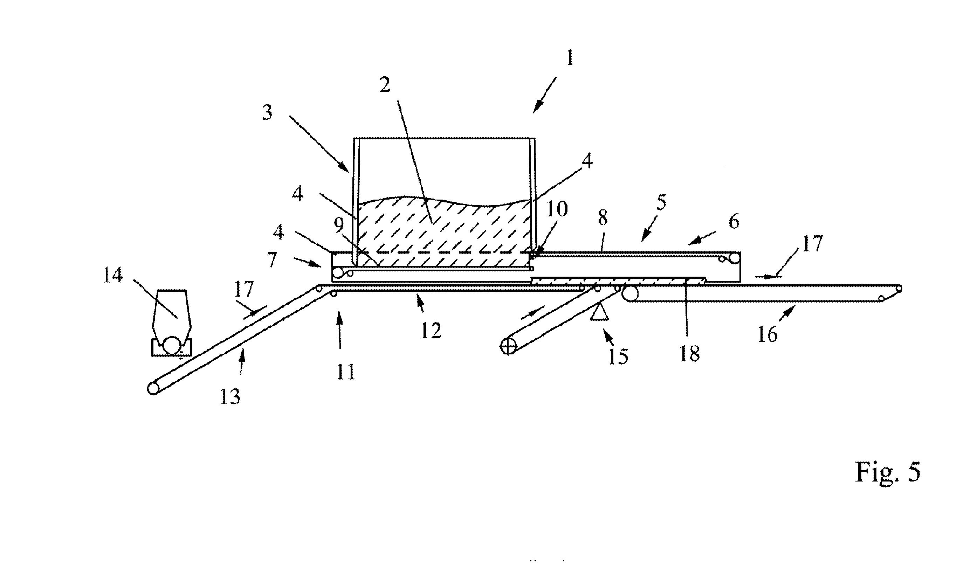

Die Figur 4 schließlich zeigt den Rückhub des Schlittenelements 5, bei dem das Schlittenelement 5 zurück in die Startposition der Figur 1 gefahren wird. Beim Verfahren des Schlittenelements 5 von links nach rechts wird die untere äußere Begrenzung der Kammer 3 zeitweilig von beiden Förderbandeinrichtungen 6 und 7 gemeinsam gebildet, bis schließlich in der Startposition der Figur 5 erneut die tiefer angeordnete Förderbandeinrichtung 7 die untere äußere Begrenzung der Kammer 3 bildet. Von oben kann nun bzw. begleitend zum Schnitt- und Hubvorgang ein Nachfüllen von Teig, vorzugsweise um die Menge, die durch den Teigblock abgetrennt wurde, erfolgen. Der abgetrennte Teigblock 18 ist, bis das Schlittenelement 5 erneut die Startposition erreicht hat, bereits über die Wiegebandeinrichtung 15 hinaus weiter transportiert worden und liegt jetzt teilweise auf der Förderbandeinrichtung 16 auf.

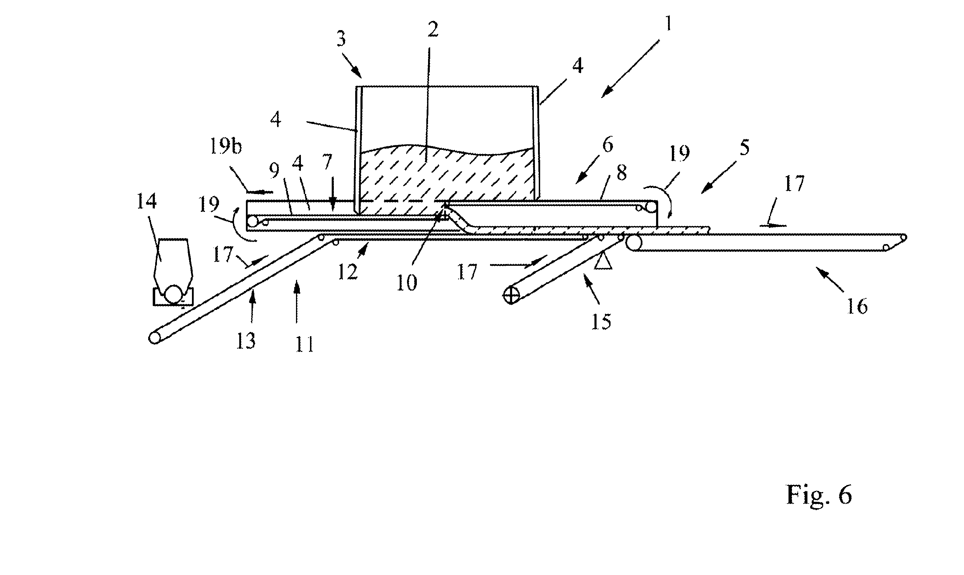

Nun wird erneut eine Schnittbewegung gemäß der Figur 6 mit einer hohen Geschwindigkeit des Schlittens beispielsweise von 7m/min durchgeführt, während die unteren separaten Förderbänder 11, 16 mit einer deutlich geringeren Geschwindigkeit von 1m/min laufen. Selbstverständlich kann diese Transportgeschwindigkeit bei der Vorrichtung 1 bzw. in anderen Ausführungsbeispielen variiert werden bzw. abweichen. Um kontinuierliche Teigstränge zu erzeugen, erfolgt die Auslösung der erneuten Schnittbewegung so, dass der zweiten Teigblock 18 genau an den vorherigen Teigblock 18 angelegt wird, während dieser zweite Teigblock 18 durch die Schlittenbewegung und damit die Bewegung des Schneidmittels 20 von der verbliebenen Teigmasse 2 abgetrennt wird. Auf diese Art und Weise kann eine Abtrennung von Teigblöcken bzw. Teigsträngen auf eine besonderes schonende Art und Weise erreicht werden, wobei insbesondere durch den Abtrennvorgang die Porenstruktur weicher und angegarter Teige nicht angegriffen wird.

### Bezugszeichen liste

- 1: Vorrichtung
- 2: Teigmasse
- 3: Kammer
- 4: Äußeres Begrenzungselement
- 5: Schlittenelement
- 6: Förderbandeinrichtung
- 7: Förderbandeinrichtung
- 8: Bänder
- 9: Bänder
- 10: Vertikaler Spalt
- 11: Separate Förderbandeinrichtung
- 12: Horizontaler Abschnitt
- 13: Vertikaler ansteigender Abschnitt
- 14: Bemehlungseinrichtung
- 15: Wiegebandeinrichtung
- 16: Horizontale Förderbandeinrichtung
- 17: Pfeile
- 18: Teigblock
- 19: Pfeile
- 19b: Pfeil
- 19c: Kreis
- 20: Schneidmittel

## Patentansprüche

1. Vorrichtung (1) zum Abtrennen eines Teigblocks (18) von einer Teigmasse (2) mit einer von äußeren Begrenzungselementen (4) gebildeten Kammer (3) zur Aufnahme der Teigmasse (2) und zur Abgabe des von der Teigmasse (2) abgetrennten Teigblocks (18), **dadurch gekennzeichnet, dass** als unteres und, zumindest im Wesentlichen, horizontal angeordnetes äußeres Begrenzungselement (4) der Kammer (3) ein horizontal verfahrbares Schlittenelement (5) mit wenigstens einer ihrerseits relativ zum Schlittenelement (5) bewegbaren Teigauflagefläche und mit wenigstens einem beim Verfahren des Schlittenelements (5) mitbewegbaren und derart zum Abtrennen des Teigblocks (18) von der Teigmasse (2) ausgebildeten Schneidmittel (20) vorgesehen ist.

2. Vorrichtung (1) nach Anspruch 1, **dadurch gekennzeichnet, dass** das Schlittenelement (5) zur Bildung von relativ zum Schlittenelement (5) bewegbaren Teigauflageflächen zwei gegenüber dem Schlittenelement (5) fest gelagerte und/oder, zumindest im Wesentlichen, horizontal angeordnete und/oder in vertikaler Richtung zur Ausbildung eines Spalts (10), zumindest im Wesentlichen, um die Höhe des von der Teigmasse (2) abzutrennenden Teigblocks (18) gegeneinander versetzte und/oder in Abhängigkeit von einer gewünschten Höhe des abzutrennenden Teigblocks (18) einstellbar gegeneinander versetzte Förderbandeinrichtungen (6, 7) aufweist, die insbesondere zum Abtrennen des Teigblocks (18) beim horizontalen Verfahren des Schlittenelements (5) hinsichtlich ihrer Förderrichtung relativ zum Schlittenelement (5) gleichsinnig betreibbar sind.

3. Vorrichtung (1) nach Anspruch 2, **dadurch gekennzeichnet, dass** die Förderbandeinrichtungen (6, 7) derart in horizontaler Richtung fest zueinander angeordnet sind, dass ihre horizontale Relativposition beim horizontalen Verfahren des Schlittenelements (5), zumindest im Wesentlichen, gleich bleibt, und/oder dass die Förderbandeinrichtungen (6, 7) mit, zumindest im Wesentlichen, gleicher Fördergeschwindigkeit und/oder derart, dass sie beim Verfahren des Schlittenelements (5) abrollen, betreibbar sind.

4. Vorrichtung (1) nach einem der Ansprüche 2 oder 3, **dadurch gekennzeichnet, dass** genau ein Schneidmittel (20) vorgesehen ist und/oder dass wenigstens ein Schneidmittel (20) in unmittelbarer Nähe der oberen Förderbandeinrichtung (6), insbesondere unterhalb der oberen Förderbandeinrichtung (6), und/oder am und/oder im Bereich des der zweiten Förderbandeinrichtung (7) zugewandten Endes der oberen Förderbandeinrichtung (6) angeordnet ist und/oder dass wenigstens ein Schneidmittel (20) ein Säge, insbesondere eine Bandsäge, und oder ein Messer, insbesondere ein Ultraschallmesser, und/oder eine Schneidkante und/oder ein auf einem Laser- und/oder Wasserstrahl- und/oder mechanischen Wirkprinzip basierendes Schneidmittel (20) ist.

5. Vorrichtung (1) nach einem der vorangehenden Ansprüche, **dadurch gekennzeichnet, dass** das Schlittenelement (5) derart verfahrbar ist, dass das wenigstens eine mitbewegbare Schneidmittel (20) zum Abtrennen des Teigblocks (18) über die, zumindest im Wesentlichen, gesamte horizontale Länge oder Breite der Kammer (3) zur Aufnahme der Teigmasse (2) verfahrbar ist, und/oder dass das Schlittenelement (5) mit hoher Verfahrgeschwindigkeit, insbesondere mit einer Verfahrgeschwindigkeit im Bereich von 2m/min bis 10m/min, insbesondere mit, zumindest näherungsweise, 7m/min, verfahrbar ist .

6. Vorrichtung (1) nach einem der vorangehenden Ansprüche, **dadurch gekennzeichnet, dass** das Schlittenelement (5) ein in das Schlittenelement (5) integriertes und mitbewegbares vorderes und/oder hinteres oder wenigstens ein seitliches äußeres Begrenzungselement (4) für die Kammer (3) für die Teigmasse (2) aufweist, insbesondere in Form einer Platte und/oder, zumindest im Wesentlichen, in der Höhe eines vertikalen Spalts (10) zwischen zwei Förderbandeinrichtungen (6, 7) des Schlittenelements (5) und/oder derart, dass sich das oder die in das Schlittenelement (5) integrierten äußeren Begrenzungselemente (4) mit nicht mitbewegbaren vorderen und/oder hinteren oder seitlichen äußeren Begrenzungselementen (4) der Kammer (3) zur Ausbildung einer geschlossenen Begrenzungsfläche ergänzen, und/oder ein äußeres Begrenzungselement (4) aus und/oder mit wenigstens einer vertikal angeordneten Förderbandeinrichtung.

7. Vorrichtung (1) nach einem der vorangehenden Ansprüche, **dadurch gekennzeichnet, dass** das Schlittenelement (5) wenigstens eine Abgabeöffnung zur Abgabe des durch das wenigstens eine Schneidmittel (20) abgetrennten Teigblocks nach unten aufweist, insbesondere in Form eines oder des Spalts (10) zwischen zwei Förderbandeinrichtungen (6, 7), und/oder dass unterhalb des Schlittenelements (5) wenigstens eine separate Förderbandeinrichtung (11) vorgesehen ist, die zum Weitertransport des durch das wenigstens eine Schneidmittel (20) abgetrennten Teigblocks (18) ausgebildet ist und/oder die einen, zumindest im Wesentlichen, horizontal verlaufenden und einen in Förderrichtung vorgelagerten ansteigend verlaufenden Abschnitt (12, 13) aufweist und/oder die kontinuierlich und/oder mit variabler Geschwindigkeit betreibbar ist und/oder der wenigstens eine oder genau eine Bemehlungseinrichtung (14) zugeordnet ist und/oder die mit einer im Vergleich zur Verfahrgeschwindigkeit des Schlittenelements (5) niedrigen Fördergeschwindigkeit, insbesondere im Bereich von 1 m/min betreibbar ist.

8. Vorrichtung (1) nach einem der vorangehenden Ansprüche, **dadurch gekennzeichnet, dass**, insbesondere im Anschluss an eine unterhalb des Schlittenelements angeordnete separate Förderbandeinrichtung (11), eine Messeinrichtung und/oder Wiegebandeinrichtung (15) zur Kontrolle des Massen- und/oder Volumenstroms des oder der Teigblöcke (18) und/oder zur Erzeugung eines die Schnittbewegung und/oder das endgültige Abtrennen für einen nachfolgenden Teigblock (18) auslösenden Signals vorgesehen ist und/oder dass die Vorrichtung (1) zur direkt aneinander anschließenden Anordnung abgetrennter Teigblöcke (18) auf der unterhalb des Schlittenelements (5) angeordneten separaten Förderbandeinrichtung (11) ausgebildet ist, insbesondere in Abhängigkeit eines Signals der Messeinrichtung und/oder Wiegebandeinrichtung (15).

9. Vorrichtung (1) nach einem der vorangehenden Ansprüche 7 oder 8, **dadurch gekennzeichnet, dass** sich an eine oder die unterhalb des Schlittenelements (5) angeordnete Förderbandeinrichtung (11) oder Mess- und/oder Wiegebandeinrichtung (15) eine, gegebenenfalls weitere, insbesondere, ein zumindest im Wesentlichen, horizontal angeordnete, Förderbandeinrichtung (16) anschließt, insbesondere eine mit einer abweichenden Fördergeschwindigkeit zu einer ersten separaten Förderbandeinrichtung (11) betreibbare weitere Förderbandeinrichtung (16).

10. Verfahren zum Abtrennen eines Teigblocks (18) von einer Teigmasse (2), die in einer von äußeren Begrenzungselementen (4) gebildeten Kammer (3) aufgenommen ist oder wird, aus der der von der Teigmasse (2) abgetrennte Teigblock anschließend abgegeben wird, insbesondere Verfahren zum Abtrennen eines Teigblocks (18) mittels einer Vorrichtung (1) nach einem der Ansprüche 1 bis 9, **dadurch gekennzeichnet, dass** die Kammer (3) unten durch ein, zumindest im Wesentlichen, horizontal angeordnetes Schlittenelement (5) als äußeres Begrenzungselement (4) begrenzt wird, das im Rahmen des Verfahrens horizontal verfahren wird und das mit wenigstens einer Teigauflagefläche, die ihrerseits beim Verfahren des Schlittenelements (5) relativ zum Schlittenelement (5) bewegt wird, und mit wenigstens einem Schneidmittel (20) ausgebildet ist, das beim Verfahren des Schlittenelements (5) mitbewegt wird und derart den Teigblock (18) von der Teigmasse (2) abtrennt.

11. Verfahren nach Anspruch 10, **dadurch gekennzeichnet, dass** die relativ zum Schlittenelement (5) bewegten Teigauflageflächen mittels zweier gegenüber dem Schlittenelement (5) fest gelagerter und/oder, zumindest im Wesentlichen, horizontal angeordneter und/oder in vertikaler Richtung zur Ausbildung eines Spalts (10), zumindest im Wesentlichen, um die Höhe des von der Teigmasse (2) abzutrennenden Teigblocks (18) gegeneinander versetzter und/oder in Abhängigkeit von einer gewünschten Höhe des abzutrennenden Teigblocks einstellbar gegeneinander versetzter Förderbandeinrichtungen (6, 7) gebildet werden, wobei die Förderbandeinrichtungen (6, 7) insbesondere zum Abtrennen des Teigblocks (18) beim horizontalen Verfahren des Schlittenelements (5) hinsichtlich ihrer Förderrichtung relativ zum Schlittenelement (5) gleichsinnig betrieben werden.

12. Verfahren nach einem der Ansprüche 10 oder 11, **dadurch gekennzeichnet, dass** die Förderbandeinrichtungen (6, 7) derart in horizontaler Richtung fest zueinander angeordnet sind oder werden, dass ihre horizontale Relativposition beim horizontalen Verfahren des Schlittenelements (5), zumindest im Wesentlichen, gleich bleibt, und/oder dass die Förderbandeinrichtungen (6, 7) mit, zumindest im Wesentlichen, gleicher Fördergeschwindigkeit und/oder derart, dass sie beim Verfahren des Schlittenelements (5) abrollen, betrieben werden.

13. Verfahren nach einem der Ansprüche 10 bis 12, **dadurch gekennzeichnet, dass** das Schlittenelement (5) derart verfahren wird, dass das wenigstens eine mitbewegte Schneidmittel (20) zum Abtrennen des Teigblocks (18) ausgehend von einer Startposition im Bereich eines seitlichen oder vorderen oder hinteren äußeren Begrenzungselements (4) der Kammer (3) zur Aufnahme der Teigmasse (2) über die, zumindest im Wesentlichen, gesamte horizontale Breite oder Länge der Kammer (3) in eine seitliche oder hintere oder vordere Endlage im Bereich eines gegenüberliegenden seitlichen oder hinteren oder vorderen äußeren Begrenzungselements (4) verfahren wird und so eine Schnittbewegung ausführt, und/oder dass das Schlittenelement (5) mit hoher Verfahrgeschwindigkeit, insbesondere mit einer Verfahrgeschwindigkeit im Bereich von 2m/min bis 10m/min, insbesondere mit, zumindest näherungsweise, 7m/min, verfahren wird.

14. Verfahren nach Anspruch 13, **dadurch gekennzeichnet, dass** ausgehend von der seitlichen oder hinteren oder vorderen Endlage das Schlittenelement (5) und damit das wenigstens eine Schneidmittel (20) im Rahmen einer Rückhubbewegung wieder zurück in die Startposition verfahren wird, woraufhin die Teigmasse (2) gegebenenfalls in der Kammer (3) um den vertikalen Versatz der beiden Förderbandeinrichtungen nach unten nachrutscht, so dass erneut eine Schnittbewegung zur Abtrennung eines Teigblocks (14) durchgeführt werden kann.

15. Verfahren nach einem der Ansprüche 10 bis 14, **dadurch gekennzeichnet, dass**, insbesondere im Anschluss an eine unterhalb des Schlittenelements (5) angeordnete separate Förderbandeinrichtung, eine Messeinrichtung und/oder Wiegebandeinrichtung (15) den Massen- und/oder Volumenstrom des oder der Teigblöcke (18) kontrolliert und/oder ein die Schnittbewegung oder das endgültige Abtrennen für einen nachfolgenden Teigblock (18) auslösendes Signal erzeugt und/oder dass abgetrennte Teigblöcke (18) direkt aneinander anschließend auf der unterhalb des Schlittenelements (5) angeordneten Förderbandeinrichtung (11) angeordnet werden, insbesondere in Abhängigkeit eines Signals der Messeinrichtung und/oder Wiegebandeinrichtung (15).
